# EUROPEAN PATENT SPECIFICATION

(11) **EP 1 716 615 B1**
(45) Date of publication and mention of the grant of the patent: **15.10.2008**
(21) Application number: 05814254.8
(22) Date of filing: 01.12.2005
(51) Int. Cl.: H01M 8/12, C04B 35/50, H01M 4/94

(54) **FUEL CELL**
BRENNSTOFFZELLE
PILE A COMBUSTIBLE

(30) Priority: 09.12.2004 JP 2004356395
(43) Date of publication of application: 02.11.2006
(73) Proprietor: TOYOTA JIDOSHA KABUSHIKI KAISHA, Toyota-shi, Aichi 471-8571 (JP)
(72) Inventor: IIJIMA, Masahiko, Toyota-shi Aichi 4718571 (JP); IGUCHI, Satoshi, Toyota-shi Aichi 4718571 (JP)
(74) Representative: TBK-Patent
(86) International application number: PCT/JP2005/022517
(87) International publication number: WO 2006/062146

(56) References cited:
- EP-A- 1 048 613
- EP-A- 1 394 884
- ZISEKAS S ET AL: "Preparation of the SrCe0.95Yb0.05O3-alpha proton conductor and study of the electrokinetics at the SrCe0.95Yb0.05O3-alpha/Pd interface" SOLID STATE IONICS, NORTH HOLLAND PUB. COMPANY. AMSTERDAM, NL, vol. 175, no. 1-4, 30 November 2004 (2004-11-30), pages 589-592, XP004667646 ISSN: 0167-2738
- YAMAGUCHI S ET AL: "Construction of fuel cells based on thin proton conducting oxide electrolyte and hydrogen-permeable metal membrane electrode" SOLID STATE IONICS, NORTH HOLLAND PUB. COMPANY. AMSTERDAM, NL, vol. 162-163, September 2003 (2003-09), pages 291-296, XP004460753 ISSN: 0167-2738

## Description

The present invention relates to a fuel cell.

### Background Art

Various types of fuel cells have been proposed in the prior art, and among these a fuel cell configuration is known wherein an electrolyte layer is formed via deposition of an electrolytic material comprising a solid oxide having proton conductivity on a hydrogen-permeable metal layer. Here, by depositing the electrolyte layer on the hydrogen-permeable metal layer consisting of a base material, the electrolyte layer can be made thinner, enabling the fuel cell to operate at lower temperatures.

### DISCLOSURE OF THE INVENTION

However, where a hydrogen-permeable metal layer is adjacent to a solid oxide layer comprising a ceramic layer, because the expansion coefficients of the metal and the ceramic material (i.e., the expansion coefficients during hydrogen swell or thermal expansion) differ, undesirable stress may arise at the interface between the hydrogen-permeable metal layer and the solid oxide layer. This interface stress may lead to damage to the entire layered structure including the electrolyte layer, such as separation of the layers.

To address the above problems, an object of the present invention is to prevent damage to a fuel cell caused by a difference in the expansion coefficients of metal and solid oxide material in a fuel cell that includes a hydrogen-permeable metal layer and an electrolyte layer composed of a solid oxide material.

In order to achieve the above object, a first aspect of the present invention provides a fuel cell. The fuel cell of the first aspect of the invention includes a hydrogen-permeable metal layer containing a hydrogen-permeable metal, an electrolyte layer consisting of a metal oxide material exhibiting proton conductivity, and an intermediate layer disposed between the hydrogen-permeable metal layer and the electrolyte layer and is composed of at least one metal layer,
wherein the metal layer in contact with the electrolyte layer contains a metal element in common with the electrolyte layer.

According to the fuel cell of first aspect of the present invention having the above configuration, because the metal layer adjacent to the electrolyte layer contains a metal element in common therewith, the common metal element contributes to the bond between the metal layer and the electrolyte layer, enabling the bonding strength at the interface between the metal oxide layer and the metal layer to be increased. Therefore, the interface strength in the laminated body including a hydrogen-permeable metal layer and an electrolyte layer can be improved and separation of the layers due to a difference in the expansion coefficients of the layers during thermal expansion or hydrogen swell can be prevented.

A second aspect of the present invention provides a fuel cell. The fuel cell of the second aspect of the present invention includes a hydrogen-permeable metal layer containing a hydrogen-permeable metal, a metal intermediate layer that is formed on the hydrogen-permeable metal layer and is composed of at least one metal layer, a ceramic intermediate layer that is formed on the metal intermediate layer and is composed of at least one metal oxide layer, and an electrolyte layer that is formed on the ceramic intermediate layer and consists of a metal oxide material exhibiting proton conductivity, wherein the metal oxide layer in contact with the metal intermediate layer contains a metal element in common with the metal layer in contact with the ceramic intermediate layer, and the metal oxide layer in contact with the electrolyte layer contains a metal element in common with the electrolyte layer.

According to the fuel cell of the second aspect of the present invention having the above configuration, the metal oxide layer and adjacent metal layer have a common metal element, therefore the common metal element contributes to the bonding between the ceramic intermediate layer and the metal intermediate layer, enabling the bonding strength at the interface of the ceramic intermediate layer and the metal intermediate layer to be increased. In addition, since the metal oxide layer and adjacent electrolyte layer have a common metal element , the common metal element contributes to the bonding between the ceramic intermediate layer and the electrolyte layer, enabling the bonding strength at the interface of the ceramic intermediate layer and the electrolyte layer to be increased. Therefore, the interface strength in the laminated body including a hydrogen-permeable metal layer and an electrolyte layer may be improved, and separation of the layers due to a difference in the expansion coefficients of the layers during thermal expansion or hydrogen swell can be prevented.

In the fuel cell of the second aspect of the present invention, the ceramic intermediate layer may be composed of a single the metal oxide layer, the metal layer in contact with the ceramic intermediate layer may contain a metal element in common with the electrolyte layer and the ceramic intermediate layer, and the ceramic intermediate layer may contain a higher percentage of the metal element in common with the electrolyte layer than the electrolyte layer.

With this configuration, the bonding strength at the interface of the metal oxide layer and the metal layer, which have a particularly large difference in their expansion coefficients, may be effectively increased.

In the fuel cell of the second aspect of the present invention, the ceramic intermediate layer may be composed of an oxide of a metal comprising a constituent component of the metal layer in contact with the ceramic intermediate layer, and the electrolyte layer may consist of a compound oxide material containing multiple metal elements including the common metal element.

With this configuration, the percentage of the common metal element common to the ceramic intermediate layer and the adjacent metal layer and contained in the ceramic intermediate layer may be made particularly high, enabling the interface bonding strength to be further increased.

In the fuel cell of the second aspect of the present invention, the metal oxide layer that composes the ceramic intermediate layer may contain a metal element in common with a layer in contact therewith.

By having the metal oxide layer contain a metal element in common with an adjacent layer, the interface bonding strength between the metal oxide layer and the layer adjacent thereto may be increased.

In the fuel cell of the second aspect of the present invention, the fuel cell of the second aspect of the present invention may further include a composite layer that is disposed between the metal oxide layer composes the ceramic intermediate layer and a layer in contact with this metal oxide layer, and is formed with a mixture of the constituent components of the two adjacent layers.

The use of a composite layer enables the interface of the two adjacent layers having a common metal element to be effectively increased, thereby enabling the interface strength to be increased.

In the fuel cell of the second aspect of the present invention, the fuel cell of the second aspect of the present invention may further include a catalyzing layer that is disposed at, among the interfaces of the various layers laminated between the hydrogen-permeable metal layer and the electrolyte layer, the interface of a layer having proton conductivity, exhibits activity that generates protons from hydrogen atoms and further has multiple pinholes that permit the layers above and below the catalyzing layer to come into contact with each other.

With such a configuration, where it is sought to increase the interface bonding strength through the use of an intermediate layer comprising a metal layer or a metal oxide layer, there is no decline in the supply of protons to the electrolyte layer or in fuel cell performance due to such intermediate layer. Here, because the catalyzing layer has pinholes that permit the upper and lower layers to come into mutual contact, the interface bonding strengthening effect of the intermediate layer may be maintained.

The present invention may be implemented according in various forms other than the implementation described above, and may be realized in the form of a fuel cell manufacturing method or the like, for example.

### BRIEF DESCRIPTION OF THE DRAWINGS

Fig. 1 is a simplified cross-sectional view of the basic configuration of an individual cell;
Fig. 2 is an explanatory drawing showing an example of the specific configuration of the laminated hydrogen-permeable metal layer , intermediate layer and electrolyte layer;
Fig. 3 is an explanatory drawing showing an example of the specific configuration of the laminated hydrogen-permeable metal layer , intermediate layer and electrolyte layer of a second embodiment; and
Fig. 4 is an explanatory drawing showing an example of the specific configuration of the hydrogen-permeable metal layer , intermediate layer and electrolyte layer of a third embodiment.

### BEST MODE FOR IMPLEMENTING THE INVENTION

The present invention will now be described based on several embodiments.

### A. First embodiment

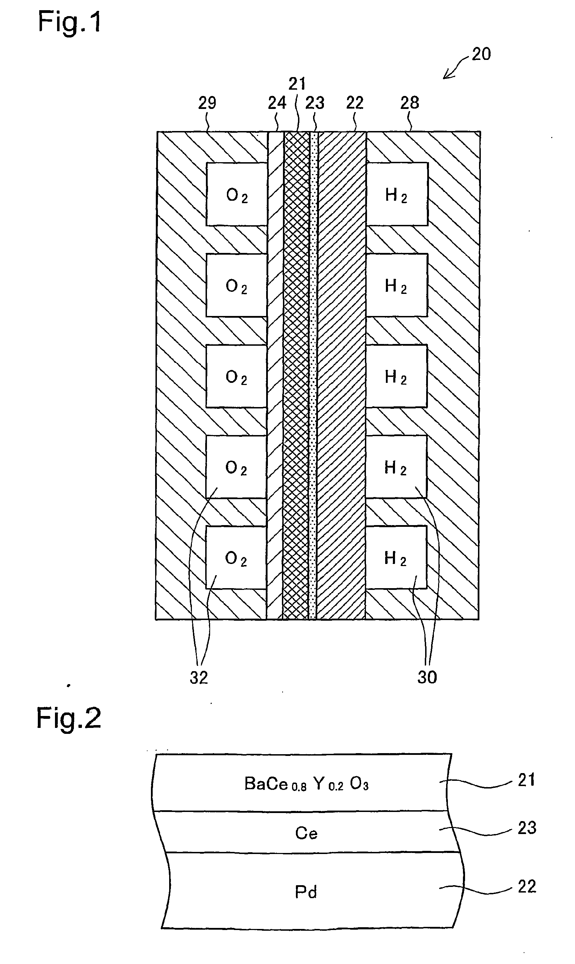

Fig. 1 is a simplified cross-sectional drawing showing the basic configuration of an individual cell 20 comprising the fuel cell of this embodiment. The individual cell 20 has a layered configuration having a hydrogen-permeable metal layer 22, an intermediate layer 23 formed on one of the surfaces of the hydrogen-permeable metal layer 22, an electrolyte layer 21 formed on the intermediate layer 23, and a cathode electrode 24 formed on the electrolyte layer 21. The individual cell 20 further includes two gas separators 28, 29 that sandwich the layered configuration from either side. Cell-interior fuel gas flow paths 30 through which hydrogen-containing fuel gas passes are formed between the gas separator 28 and the hydrogen-permeable metal layer 22. In addition, cell-interior oxygenating gas flow paths 32 through which oxygen-containing oxygenating gas passes are formed between the gas separator 29 and the cathode electrode 24.

The hydrogen-permeable metal layer 22 is a dense layer formed from metal exhibiting hydrogen permeability, such as palladium (Pd) or a Pd alloy, for example. Alternatively, the hydrogen-permeable metal layer 22 may comprise a multilayer membrane formed by forming Pd or a Pd alloy on at least one surface (the surface on the side of the cell-interior fuel gas flow paths 30) of a substrate composed of a Group 5 metal such as vanadium (V) (or niobium, tantalum or other Group 5 metal) or a Group 5 metal alloy. This hydrogen-permeable metal layer 22 operates as an anode electrode in the fuel cell of this invention. Furthermore, the hydrogen-permeable metal layer 22 is a layer that serves as a base layer for the formation of the electrolyte layer 21, and may be formed to a thickness of several tens of microns (approximately 40µm, for example).

The intermediate layer 23 is a metal layer, and the electrolyte layer 21 is a layer composed of a solid oxide material exhibiting proton conductivity. Here, a perovskite-type ceramic proton-conductive material such as the BaCeO₃ series or the SrCeO₃ series may be used as the solid oxide material forming the electrolyte layer 21, and the intermediate layer is a metal layer containing a metal element comprising a constituent component of the electrolyte layer 21. Fig. 2 is an explanatory drawing showing an expanded view of the laminated hydrogen-permeable metal layer 22, intermediate layer 23 and electrolyte layer 21, and shows an example of the specific configuration of these three layers in a schematic fashion. In Fig. 2, the hydrogen-permeable metal layer 22 is formed from Pd, the electrolyte layer 21 is formed from BaCe_{0.8}Y_{0.2}O₃, and the intermediate layer 23 is formed from cerium (Ce), which is a metal element incorporated in the electrolyte layer 21.

The metal intermediate layer 23 may be formed via physical vapor deposition (PVD), chemical vapor deposition (CVD), plating or the like onto the hydrogen-permeable metal layer 22. The thickness of the intermediate layer 23 may range from 10-100 nm. Here, the intermediate layer 23 may comprise a porous layer having a thickness not exceeding 15 nm, for example.

The electrolyte layer 21 may be formed by generating the above solid oxide material onto the intermediate layer 23 disposed on the hydrogen-permeable metal layer 21. Depositing the electrolyte layer 21 onto the dense hydrogen-permeable metal layer 22 in this fashion enables the electrolyte layer 21 to be made sufficiently thin. Making the electrolyte layer 21 thin enables the membrane resistance of the electrolyte layer 21 to be further reduced, as well as enables the fuel cell to be operated at a temperature range of approximately 200-600°C, which is lower than the operating temperature of the solid electrolyte material-based fuel cell of the prior art. The thickness of the electrolyte layer 21 may range from 1-5µm, for example. PVD, CVD, or a similar method may be used as the deposition method for the electrolyte layer 21.

The cathode electrode 24 is a layer that includes a catalyzing metal having a catalyzing activity that promotes an electrochemical reaction. In this embodiment, the cathode electrode 24 is formed from Pd. Where the cathode electrode 24 is formed from a different precious metal that does not exhibit hydrogen permeability, such as platinum (Pt) or the like, a three-phase interface may be ensured by forming the cathode electrode 24 to a sufficiently small thickness that it is porous overall. The cathode electrode 24 may be formed using a method such as PVD, CVD or plating.

While not shown in Fig. 1, a conductive and gas-permeable charge collector may be disposed between the hydrogen-permeable metal layer 22 and the gas separator 28 and/or between the cathode electrode 24 and the gas separator 29. The charge collector may be formed from a porous foamed metal plate or metal mesh plate, carbon cloth or carbon paper, conductive ceramic or the like. The charge collector is preferably formed from the same material as the gas separators 28, 29 in contact therewith.

The gas separators 28, 29 are gas-impermeable plate-like members formed from carbon, metal or other conductive material. As shown in Fig. 1, prescribed protrusions and indentations are formed on the surfaces of the gas separators 28, 29 to form cell-interior fuel gas flow paths 30 or cell-interior oxygenating gas flow paths 32, respectively. In the fuel cell of this embodiment, there is in actuality no distinction between the gas separators 28 and 29; a gas separator may serve as the gas separator 28 having cell-interior fuel gas flow paths 30 for a given single cell 20 on one surface, while another gas separator may serve as the gas separator 29 having cell-interior oxygen flow path 32 for a cell adjacent to the given single cell 20 on the other surface. Alternatively, coolant flow paths may be formed between adjacent single cells 20 in the fuel cell (i.e., between the gas separators 28, 29).

When the fuel cell generates power, the hydrogen molecules in the fuel gas supplied to the cell-interior fuel gas flow paths 30 are separated on the surface of the hydrogen-permeable metal layer 22 into hydrogen atoms or protons through the operation of the hydrogen-permeable metal comprising a catalyzing metal. The separated hydrogen atoms or protons then pass through the electrolyte layer 21 as protons via the hydrogen-permeable metal layer 22 and the intermediate layer 23. When this occurs, at the cathode electrode 24, due to the operation of the catalyzing metal (Pd) comprising the cathode electrode 24, water is generated from the protons reaching the cathode electrode 24 after passing through the electrolyte layer 21 and the oxygen in the oxygenating gas supplied to the cell-interior oxygenating gas flow paths 32, and an electrochemical reaction is promoted.

According to the fuel cell of this embodiment having the above arrangement, because an intermediate layer 23 formed from the metal element contained in the electrolyte layer 21 is disposed between the hydrogen-permeable metal layer 22 and the electrolyte layer 21, the bonding force (interface strength) between the electrolyte layer 21 and the intermediate layer 23 can be increased by the presence of the common metal element. Therefore, where the entire laminated body in which the hydrogen-permeable metal layer 22, the intermediate layer 23 and electrolyte layer 21 are laminated together (in the discussion below, the laminated configuration from the hydrogen-permeable metal layer 22 to the electrolyte layer 21 is termed an 'electrolyte laminated body') undergoes hydrogen swell or thermal expansion, the durability of the above electrolyte laminated body can be improved.

Here, where the intermediate layer 23 and the electrolyte layer 21 share a metal element in common, metal bonding of this common metal element occurs at the interface of the intermediate layer 23 and the electrolyte layer 21, thereby strengthening the bonding force therebetween. Furthermore, at the interface of the intermediate layer 23 and the electrolyte layer 21, the metal element present in the intermediate layer 23 may bond with the oxygen atoms present in the electrolyte layer 21. In this case, because the metal element that bonds with oxygen atoms on the side of the electrolyte layer 21 is identical to the bonding metal element on the side of the intermediate layer 23, the bonding of the metal element and the oxygen atoms is stable, and the bonding strength between the intermediate layer 23 and the electrolyte layer 21 can be increased due to this bonding.

In this fuel cell, where the electrolyte laminated body described above undergoes hydrogen swell or thermal expansion, because there is an extremely large difference in the expansion coefficients of ceramic and metal, significant stress occurs at the interface of the intermediate layer 23 comprising a metal layer and the electrolyte layer 21 comprising a ceramic layer. In this embodiment, because the bonding strength between the intermediate layer 23 and the electrolyte layer 21 is strengthened as described above, damage to the above electrolyte laminated body due to separation of the electrolyte layer 21 and the intermediate layer 23 or the like can be prevented even if substantial stress occurs at the interface of the intermediate layer 23 and the electrolyte layer 21 due to their different expansion coefficients. In other words, the presence of the intermediate layer 23 enables the durability of the electrolyte laminated body as a whole to be increased significantly compared to the case in which the electrolyte layer 21 is formed directly on the hydrogen-permeable metal layer 22.

Including an intermediate layer 23 in this fashion means that the intermediate layer 23 and the hydrogen-permeable metal layer 22, which are formed from different metals, come into contact with each other, but the difference in the expansion coefficients of two metal layers is much smaller than the corresponding difference between a metal layer and a ceramic layer. Furthermore, sufficient bonding strength can be obtained between the two metal layers through the formation of a metal bond, even where the layers comprise different metals. Therefore, even if an intermediate layer 23 is present, there is no lack of bonding strength between such layer and the hydrogen-permeable metal layer 22, nor is there any damage to the durability of the electrolyte laminated body.

The Ce that comprises the intermediate layer 23 of this embodiment exhibits a certain degree of hydrogen permeability, though not the same degree as that of the hydrogen-permeable metal layer 22. By making the intermediate layer 23 thinner, the internal resistance of the fuel cell can be kept sufficiently low. Furthermore, if the intermediate layer 23 is made even thinner (15nm or less, for example) and is made porous, the hydrogen-permeable metal layer 22 and the electrolyte layer 21 can come into direct contact via the pinholes of the porous intermediate layer 23, ensuring sufficient hydrogen permeability. Even where the intermediate layer 23 is made porous as described above, because a strong bond may be ensured in areas other than the above pinhole areas between the intermediate layer 23 and the electrolyte layer 21, the durability improvement effect described above may be obtained to a sufficient degree.

### B. Second embodiment

In the first embodiment, only a metal layer was used as the intermediate layer 23, but a ceramic layer may be additionally used. This configuration will be described below as a second embodiment. Because the fuel cell of the second embodiment has a configuration identical to that of the fuel cell of the first embodiment shown in Fig. 1, the same reference numbers will be used to indicate identical components, description of which will be omitted, and only the differences between the two embodiments will be described.

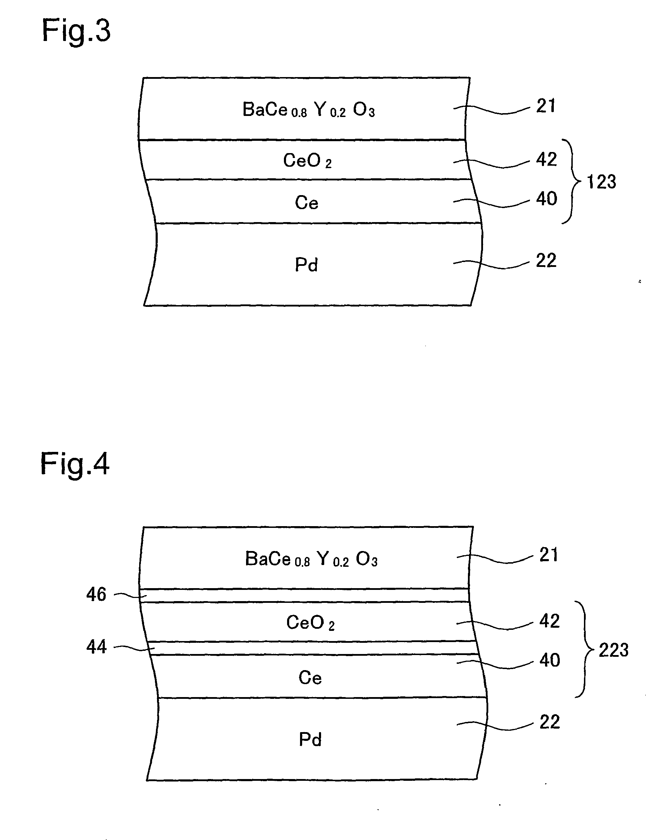

The fuel cell of the second embodiment includes between the hydrogen-permeable metal layer 22 and the electrolyte layer 21 an intermediate layer 123 instead of the intermediate layer 23. Fig. 3 is an explanatory drawing to represent in an expanded fashion the laminated hydrogen-permeable metal layer 22, intermediate layer 123 and electrolyte layer 21, in the same manner as in Fig. 2, and shows a simplified example of the specific configuration of these layers. As shown in Fig. 3, the intermediate layer 123 of the second embodiment does not comprise a single metal layer, but rather comprises a metal intermediate layer 40 disposed adjacent to the hydrogen-permeable metal layer 22 and a ceramic intermediate layer 42 disposed adjacent to the electrolyte layer 21. Here, the metal intermediate layer 40 is formed from Ce, while the ceramic intermediate layer 42 is formed from cerium oxide (CeO₂).

The metal intermediate layer 40 can range in thickness from 10-100nm, and may be formed in the same manner as the intermediate layer 23 of the first embodiment. Similarly, the ceramic intermediate layer 42 may have the same thickness range of 10-100nm, and may be formed on the metal intermediate layer 40 via the PVD or CVD methods.

According to the fuel cell of the second embodiment having the above configuration, the presence of a ceramic intermediate layer 42 in addition to a metal intermediate layer 40 enables the bonding force (interface strength) between the metal layer and the ceramic layer, which have a large difference in expansion coefficients, to be further increased. In other words, because the ceramic intermediate layer 42 formed from CeO₂ contains a larger percentage of the metal element Ce that is in common with the metal intermediate layer 40 than does the electrolyte layer 21 formed from BaCe_{0.8}O₃, a more pronounced inter-layer bonding force strengthening effect attributable to the common metal element Ce may be obtained than may be obtained in the case where the electrolyte layer 21 is laminated directly onto the metal intermediate layer 40.

Furthermore, in this embodiment, the bonding force between the ceramic intermediate layer 42 and the electrolyte layer 21 can also be strengthened due to their common metal element Ce. In other words, because the Ce in the ceramic intermediate layer 42 bonds with the oxide of the same element in the electrolyte layer 21 (the identical elements engage in metal bonding, or alternatively, the Ce bonds in a stable fashion with the Ce-bonded in the electrolyte layer 21), the inter-layer bonding force can be strengthened in comparison with the bonding force between metal oxide layers that do not include a same metal element. Because the difference in expansion coefficients between these ceramic layers is smaller than the corresponding difference between a ceramic layer and a metal layer, the stress occurring at the interface attributable to a difference in expansion coefficients is also smaller.

In the fuel cell of this embodiment as well, as in the first embodiment, the internal resistance of the fuel cell may be minimized by reducing the thickness of the metal intermediate layer 40 formed from Ce. Furthermore, the hydrogen permeability between the hydrogen-permeable metal layer 22 and the ceramic intermediate layer 42 may be ensured by forming the metal intermediate layer 40 with an even smaller thickness such that it becomes porous, thereby creating pinholes in the metal intermediate layer 40.

The CeO₂ from which the ceramic intermediate layer 42 of this embodiment is formed exhibits a certain degree of proton conductivity, though not to the degree exhibited by the electrolyte layer 21. By making the ceramic intermediate layer 42 thinner, the internal resistance of the fuel cell can be kept sufficiently low. Alternatively, if the ceramic intermediate layer 42 is made even thinner (15nm or less, for example) and is made porous, the upper and lower layers can come into direct contact via the pinholes of the porous ceramic intermediate layer 42, enabling sufficient hydrogen permeability to be ensured. Even where the ceramic intermediate layer 42 is made porous as described above, because a strong bond may be ensured in areas other than the above pinholes between the ceramic intermediate layer 42 and the metal intermediate layer 40 and between the ceramic intermediate layer 42 and the electrolyte layer 21, the durability improvement effect described above may be obtained to a sufficient extent.

### C. Third embodiment

Fig. 4 is an explanatory drawing showing the configuration of a fuel cell of a third embodiment. Because the fuel cell of the third embodiment has a configuration identical to that of the fuel cell of the second embodiment, the same reference numbers will be used to indicate identical components, description of which will be omitted, and only the differences between the two embodiments will be described. The fuel cell of the third embodiment includes between the hydrogen-permeable metal layer 22 and the electrolyte layer 21 an intermediate layer 223 in place of the intermediate layer 123. Fig. 4 is an explanatory drawing to represent in an expanded fashion the laminated hydrogen-permeable metal layer 22, intermediate layer 223, and electrolyte layer 21, in the same manner as Fig. 3, and shows a simplified example of the specific configuration of these layers.

As shown in Fig. 4, the intermediate layer 223 of the third embodiment, like the second embodiment, includes a metal intermediate layer 40 disposed adjacent to the hydrogen-permeable metal layer 22 and a ceramic intermediate layer 42 disposed on the side of the electrolyte layer 21. In addition, in the third embodiment, a first composite layer 44 is disposed between the metal intermediate layer 40 and the ceramic intermediate layer 42, and a second composite layer is disposed between the ceramic intermediate layer 42 and the electrolyte layer 21. Here, the first composite layer 44 is a layer that is formed from a mixture of the Ce that comprises the metal intermediate layer 40 and the CeO₂ that comprises the ceramic intermediate layer 42. Furthermore, the second composite layer 46 is a layer that is formed from a mixture of the CeO₂ that comprises the ceramic intermediate layer 42 and the BaCe_{0.8}Y_{0.2}O₃ that comprises the electrolyte layer 21.

The metal intermediate layer 40 of the third embodiment may range in thickness from 10-100nm, and can be formed in the same fashion as the metal intermediate layer 40 of the second embodiment. The first composite layer 44 of the third embodiment may be formed on the metal intermediate layer 40 using PVD, CVD or a similar method, with the composite material described above comprising the material to be deposited. The ceramic intermediate layer 42 may range in thickness from 10-100nm as in the second embodiment, and may be formed on the metal intermediate layer 40 using PVD, CVD or a similar method. The second composite layer 46 may be formed on the ceramic intermediate layer 42 using PVD, CVD or a similar method, with the composite material described above comprising the material to be deposed. The first and second composite layers may be thinner than the above metal intermediate layer 40 or ceramic intermediate layer 42, and may range in thickness from 5-80nm, for example. Furthermore, the first and second composite layers need not be simply layers that combine the constituent components of the adjacent upper and lower layers; rather, the percentage content ratios of the constituent components may change gradually as one travels from the interface with one adjacent surface to the interface with the other adjacent surface, thereby forming a gradient interface. In other words, a configuration may be adopted wherein at the interface with one adjacent layer, the percentage content ratio of the constituent component for that layer is high, and the percentage content ratio of the other layer increases as one moves toward the interface with the other layer.

According to the fuel cell of the third embodiment having the above configuration, in addition to the effect obtained in the second embodiment by including a metal intermediate layer 40 and a ceramic intermediate layer 42, the effect of strengthening the bonding force and increasing adhesion at the interfaces at which the first and second composite layers exist can be obtained. In other words, by including composite layers comprising the constituent components of the upper and lower layers, the bonding interface involving the bonding of the common metal element in such upper and lower layers increases microscopically, the bonding force between the upper and lower layers strengthens, and the durability of the electrolyte laminated body as a whole may be further increased.

Metal elements have the characteristic that they diffuse gradually inside a ceramic layer. Therefore, there may be cases in which the composite layer 44 need not be affirmatively formed between the metal intermediate layer 40 and the ceramic intermediate layer 42 at the time of manufacture. Even if the first composite layer 44 is not formed at the time of manufacture, the first composite layer 44 may be effectively created inside the manufactured cell over time.

### D. Variations:

The present invention is not limited to the above embodiments and examples, and may be implemented in various forms within the essential scope thereof, including the following variations.

### D1. Variation 1 (regarding catalyzing layer)

In the first through third embodiments, a catalyzing layer comprising Pt or Pd may be disposed between a metal layer and a ceramic layer. In other words, a catalyzing layer that generates protons from hydrogen atoms may be disposed between a layer having proton conductivity and a layer having no proton conductivity. The presence of this catalyzing layer enables protons to be supplied from the metal layer to the ceramic layer more efficiently.

For example, a catalyzing layer may be disposed between the intermediate layer 23 and the electrolyte layer 21. Furthermore, in the second embodiment, a catalyzing layer may be disposed between the metal intermediate layer 40 and the ceramic intermediate layer 42. Where a catalyzing layer is used in this fashion, it should be formed with a sufficiently small thickness such that it exhibits porosity. This allows the common metal element in the upper and lower layers to create metal bonding via the pinholes in the catalyzing layer, ensuring that the effect of increasing the inter-layer bonding force is obtained.

In addition, in the third embodiment, the first composite layer 44 disposed between the metal intermediate layer 40 and the ceramic intermediate layer 42 may be formed from a composite material including a catalyzing metal such as Pt in addition to Ce or CeO₂. This allows the effect of increasing the bonding force between the metal intermediate layer 40 and the ceramic intermediate layer 42 to be obtained, in addition to the effect of ensuring proton generation efficiency through the presence of the catalyzing layer.

### D2. Variation 2 (regarding intermediate layer)

In the first embodiment, the intermediate layer 23 comprises a Ce layer, but a Ba layer may be used instead. In this case, the bonding force between the intermediate layer 23 and the electrolyte layer 21 can be strengthened by the presence of a common metal element, and the strength of the electrolyte laminated body during hydrogen swell or thermal expansion can be increased. Moreover, while in the second embodiment the metal intermediate layer 40 was a Ce layer and the ceramic intermediate layer 42 was a CeO₃ layer, the metal intermediate layer 40 may instead comprise a Ba layer and the ceramic intermediate layer 42 may comprise a barium oxide (BaO) layer. In this case as well, by having the metal intermediate layer 40 and ceramic intermediate layer 42, as well as the ceramic intermediate layer 42 and electrolyte layer 21, share a common metal element, the inter-layer bonding force can be increased.

Furthermore, the intermediate layer 23 of the first embodiment or the metal intermediate layer 40 of the second embodiment may be formed from yttrium (Y), although the percentage content ratio of such element in the electrolyte layer 21 is lower than that for Ce or Ba. In this case, the ceramic intermediate layer 42 of the second embodiment should be formed from yttrium oxide (Y₂O₃). By having the electrolyte layer 21 and intermediate layer 23 (or the electrolyte layer 21, ceramic intermediate layer 42 and metal intermediate layer 40) contain a common metal element, even if the common metal element is an additive metal like Y that is mixed (doped) into the metal oxide material in order to provide proton conductivity, the inter-layer bonding force strengthening effect may be obtained.

If the metal oxide material comprising the electrolyte layer 21 is properly selected, a different metal element may be used as the metal element included as a common element in each layer. Where the common metal element in each layer is a transition metal such as zinc (Zn), titanium (Ti), nickel (Ni), cobalt (Co) or the like, because these metal elements exhibit hydrogen permeability (hydrogen storage capacity), the resistance of the electrolyte laminated body as a whole can be minimized, which is desirable. Where Ni or Co is used in particular, the reaction by which protons are generated from the hydrogen atoms in the electrolyte laminated body can be promoted with high efficiency without the inclusion of a catalyzing layer formed from a precious metal such as Pt.

It is preferred that the intermediate layer 23 (or the metal intermediate layer 40 and ceramic intermediate layer 42) include a metal element present in the electrolyte layer 21 as described above, but there is no particular limitation on the constituent elements of the hydrogen-permeable metal layer 22 and the electrolyte layer 21. Therefore, freedom in selecting the constituent material for the hydrogen-permeable metal layer 22 and the electrolyte layer 21 is preserved even as the inter-layer bonding force is to be strengthened, and because materials that exhibit sufficient hydrogen permeability or proton conductivity may be respectively selected for the two layers, the performance of the fuel cell as a whole may be ensured.

The intermediate layer 23 and metal intermediate layer 40 need not be formed from a single metal, and may be formed from an alloy that shares a common metal element with the electrolyte layer 21. However, in general, as the percentage content ratio of the common metal element in adjacent layers increases, the inter-layer bonding force strengthens, which is desirable.

### D3. Variation 3

The effect exhibited by the first through third embodiments can be obtained through the existence of a common metal element between a metal layer and an adjacent ceramic layer, or between adjacent ceramic layers. Several examples of possible configurations for the intermediate layer are described below. Here, in order to show the configuration of each layer in an individual cell of the fuel cell device from the electrolyte layer to the hydrogen-permeable metal layer, metal elements are expressed by the letters A through D, and the hydrogen-permeable metal layer is expressed by HM. For example, the configuration from the electrolyte layer to the hydrogen-permeable metal layer in the first embodiment shown in Fig. 2 is expressed as AB₁₋ₓDₓO₃/B/HM. The configuration of the second embodiment shown in Fig. 3 is expressed as AB₁-ₓDₓO₃/BO₂/B/HM.

### For example, the intermediate layer can be formed from multiple different metal layers. One example of this type of configuration may be expressed as AB₁₋ₓDₓO₃/AB/C/HM. Here, the metal intermediate layer on the HM side does not have a common metal element with the electrolyte layer. Even if the intermediate layer formed between the electrolyte layer and the hydrogen-permeable metal layer contains a layer that does not include a common metal element with the electrolyte layer as described above, because the common metal element AB exists between the adjacent metal layer (AB) and ceramic layer (AB₁₋ₓDₓO₃), the interface bonding force can be strengthened.

It is furthermore acceptable if the ceramic intermediate layer comprises a layer made of a complex oxide material having a higher percentage content ratio of the common metal element in common with the metal intermediate layer than the metal intermediate layer. This configuration may be expressed as AB₁₋ₓDₓO₃/ABO₃/B/HM. With this configuration as well, because a common metal element exists between the adjacent metal layer (B) and the ceramic layer (ABO₃), as well as between the adjacent ceramic layers (i.e., between the AB₁₋ₓDₓO₃ layer and the ABO₃ layer), the interface bonding strength can be increased. One specific example is BaCe_{0.8}Y_{0.2}O₃/BaCeO₃/Ce/HM. Alternatively, it is acceptable if the percentage content ratio of the common metal element in common with the metal intermediate layer is further increased in the ceramic intermediate layer, as in the case of BaCe_{0.8}Y_{0.2}O₃/Ba_{0.7}Ce_{1.3}O₃/Ce/HM, for example.

Alternatively, another example of the laminated electrolyte body including a ceramic intermediate layer comprising a compound oxide material having a higher percentage content ratio of the common metal element in common with the metal intermediate layer than the electrolyte layer may have a configuration expressed as AB₁₋ₓDₓO₃/BCO₃/BC/HM . The ceramic intermediate layer may be formed from multiple different metal oxide layers. For example, AB₁₋ₓDₓO₃/ABO₃/BCO₃/BC/HM may be used.

Where a ceramic intermediate layer is used, a metal layer that does not contain a metal element comprising a constituent component of the electrolyte layer may be included as the metal intermediate layer. Such a configuration may be expressed as AB₁₋ₓDₓO₃/ AC₁₋ₓDₓO₃/C/HM. As a specific example, BaZr_{0.8}Y_{0.2}O₃/Zr/HM may be used.

As described above, the present invention is a fuel cell in which an intermediate layer is disposed between an electrolyte layer comprising a metal oxide material and a hydrogen-permeable metal layer, wherein a metal intermediate layer comprising one or more metal layers is formed on at least the hydrogen-permeable metal layer. In addition, a ceramic intermediate layer comprising one or more metal oxide layers may be disposed between the metal intermediate layer and the electrolyte layer. In this fuel cell, a common metal element is incorporated into the metal layer and the metal oxide layer and is present at the interface thereof. In addition, a common metal element is present in the adjacent two metal oxide layers. Using this configuration, the interface bonding strength can be increased and the durability of the electrolyte laminated body as a whole can be increased.

Where the ceramic intermediate layer comprises a compound oxide material such as perovskite-type oxide material, this ceramic intermediate layer may be formed, like the electrolyte layer, from an electrolytic material exhibiting proton conductivity, or from a metal oxide material that exhibits electrical conductivity in lieu of or in addition to proton conductivity.

## Claims

1. A fuel cell comprising:
a hydrogen-permeable metal layer containing a hydrogen-permeable metal;
an electrolyte layer consisting of a metal oxide material exhibiting proton conductivity; and
an intermediate layer disposed between the hydrogen-permeable metal layer and the electrolyte layer and is composed of at least one metal layer,
wherein the metal layer in contact with the electrolyte layer contains a metal element in common with the electrolyte layer.

2. A fuel cell comprising:
a hydrogen-permeable metal layer containing a hydrogen-permeable metal;
a metal intermediate layer that is formed on the hydrogen-permeable metal layer and is composed of at least one metal layer;
a ceramic intermediate layer that is formed on the metal intermediate layer and is composed of at least one metal oxide layer; and
an electrolyte layer that is formed on the ceramic intermediate layer and consists of a metal oxide material exhibiting proton conductivity,
wherein the metal oxide layer in contact with the metal intermediate layer contains a metal element in common with the metal layer in contact with the ceramic intermediate layer, and the metal oxide layer in contact with the electrolyte layer contains a metal element in common with the electrolyte layer.

3. The fuel cell according to Claim 2, wherein the ceramic intermediate layer is composed of a single the metal oxide layer, the metal layer in contact with the ceramic intermediate layer contains a metal element in common with the electrolyte layer and the ceramic intermediate layer, and the ceramic intermediate layer contains a higher percentage of the metal element in common with the electrolyte layer than the electrolyte layer.

4. The fuel cell according to Claim 3, wherein the ceramic intermediate layer is composed of an oxide of a metal comprising a constituent component of the metal layer in contact with the ceramic intermediate layer, and the electrolyte layer consists of a compound oxide material containing multiple metal elements including the common metal element.

5. The fuel cell according to Claim 2, wherein the metal oxide layer that composes the ceramic intermediate layer contains a metal element in common with a layer in contact therewith.

6. The fuel cell according to any of Claims 2 through 5 further comprising:
a composite layer that is disposed between the metal oxide layer composes the ceramic intermediate layer and a layer in contact with this metal oxide layer, and is formed with a mixture of the constituent components of the two adjacent layers.

7. The fuel cell according to any of Claims 1 through 5 further comprising:
a catalyzing layer that is disposed at, among the interfaces of the various layers laminated between the hydrogen-permeable metal layer and the electrolyte layer, the interface of a layer having proton conductivity, exhibits activity that generates protons from hydrogen atoms and further has multiple pinholes that permit the layers above and below the catalyzing layer to come into contact with each other.

## Patentansprüche

1. Bennstoffzelle, die umfasst:
eine wasserstoffdurchlässige Metallschicht enthaltend ein wasserstoffdurchlässiges Metall;
eine Elektrolytschicht bestehend aus einem Metalloxidmaterial, das Protonenleitfähigkeit zeigt; und
eine Zwischenschicht, die zwischen der wasserstoffdurchlässigen Metallschicht und der Elektrolytschicht angeordnet ist und aus mindestens einer Metallschicht besteht,
wobei die in Kontakt mit der Elektrolytschicht befindlichen Metallschicht ein Metallelement enthält, das auch in der Elektrolytschicht enthalten ist.

2. Brennstoffzelle, die umfasst:
eine wasserstoffdurchlässige Metallschicht enthaltend ein wasserstoffdurchlässiges Metall;
eine Metallzwischenschicht, die auf der wasserstoffdurchlässigen Metallschicht gebildet ist und aus mindestens einer Metallschicht besteht;
eine keramische Zwischenschicht, die auf der Metallzwischenschicht gebildet ist und aus mindestens einer Metalloxidschicht besteht; und
eine Elektrolytschicht, die auf der keramischen Zwischenschicht gebildet ist und aus einer Metalloxidschicht besteht, die Protonenleitfähigkeit zeigt,
wobei die mit der Metallzwischenschicht in Kontakt befindlichen Metalloxidschicht ein Metallelement enthält, das auch in der Metallschicht enthalten ist, die mit der keramischen Zwischenschicht in Kontakt ist, und wobei die mit der Elektrolytschicht in Kontakt befindlichen Metalloxidschicht ein Metallelement enthält, das auch in der Elektrolytschicht enthalten ist.

3. Brennstoffzelle nach Anspruch 2, wobei die keramische Zwischenschicht aus einer einzigen Metalloxidschicht besteht, die mit der keramischen Zwischenschicht in Kontakt befindlichen Metallschicht ein Metallelement enthält, das auch in der Elektrolytschicht und der keramischen Zwischenschicht enthalten ist, und die keramische Zwischenschicht einen höheren Prozentsatz des Metallelements enthält, das auch in der Elektrolytschicht enthalten ist, als in der Elektrolytschicht enthalten ist.

4. Brennstoffzelle nach Anspruch 3, wobei die keramische Zwischenschicht aus einem Oxid eines Metalls besteht, das einen Bestandteil umfasst, der die mit der keramischen Zwischenschicht in Kontakt befindlichen Metallschicht aufbaut, und die Elektrolytschicht aus einem Verbundoxidmaterial besteht, das eine Vielzahl von Metallelementen, einschließlich des gemeinsamen Metallelements, enthält.

5. Brennstoffzelle nach Anspruch 2, wobei die Metalloxidschicht, die die keramische Zwischenschicht aufbaut, ein Metallelement enthält, das auch in einer damit in Kontakt befindlichen Schicht enthalten ist.

6. Brennstoffzelle nach einem der Ansprüche 2 bis 5, die ferner eine Verbundschicht umfasst, die zwischen der Metalloxidschicht, die die keramische Zwischenschicht bildet, und einer in Kontakt mit dieser Metalloxidschicht befindlichen Schicht angeordnet ist, und die aus einer Mischung der Aufbaubestandteile der zwei benachbarten Schichten gebildet ist.

7. Brennstoffzelle nach einem der Ansprüche 1 bis 5, die ferner:
eine katalysierende Schicht umfasst, die zwischen den Grenzflächen der verschiedenen Schichten, die zwischen der wasserstoffdurchlässigen Metallschicht und der Elektrolytschicht geschichtet sind, und der Grenzfläche einer Schicht mit Protonenleitfähigkeit angeordnet ist, wobei die katalysierende Schicht eine Aktivität zeigt, aus Wasserstoffatomen Protonen zu generieren und ferner eine Vielzahl von Löchern aufweist, die ermöglichen, dass die Schichten oberhalb und unterhalb der katalysierenden Schicht miteinander in Kontakt kommen.

## Revendications

1. Pile à combustible comprenant:
une couche en métal perméable à l'hydrogène contenant un métal perméable à l'hydrogène;
une couche électrolyte consistant en un matériau d'oxyde de métal présentant une conductivité protonique; et
une couche intermédiaire disposée entre la couche en métal perméable à l'hydrogène et la couche électrolyte et est composée d'au moins une couche en métal;
où la couche en métal qui est en contact avec la couche électrolyte contient un élément métallique en commun avec la couche électrolyte.

2. Pile à combustible comprenant:
une couche en métal perméable à l'hydrogène contenant un métal perméable à l'hydrogène;
une couche intermédiaire en métal qui est formée sur la couche en métal perméable à l'hydrogène et est composée d'au moins une couche en métal;
une couche intermédiaire en céramique qui est formée sur la couche intermédiaire en métal et est composée d'au moins une couche d'oxyde de métal; et
une couche électrolyte qui est formée sur la couche intermédiaire en céramique et consiste en un matériau d'oxyde de métal présentant une conductivité protonique,
où la couche d'oxyde de métal qui est en contact avec la couche intermédiaire en métal contient un élément métallique en commun avec la couche en métal qui est en contact avec la couche intermédiaire en céramique, et la couche d'oxyde de métal qui est en contact avec la couche électrolyte contient un élément métallique en commun avec la couche électrolyte.

3. Pile à combustible selon la revendication 2, dans laquelle la couche intermédiaire en céramique est composée d'une unique couche d'oxyde de métal, la couche en métal qui est en contact avec la couche intermédiaire en céramique contient un élément métallique en commun avec la couche électrolyte et la couche intermédiaire en céramique, et la couche intermédiaire en céramique contient un pourcentage supérieur de l'élément métallique en commun avec la couche électrolyte qu'à la couche électrolyte.

4. Pile à combustible selon la revendication 3, dans laquelle la couche intermédiaire en céramique est composée d'un oxyde d'un métal comprenant un composant constitutif de la couche en métal qui est en contact avec la couche intermédiaire en céramique, et la couche électrolyte consiste en un matériau d'oxyde composé contenant plusieurs éléments métalliques incluant l'élément métallique commun.

5. Pile à combustible selon la revendication 2, dans laquelle la couche d'oxyde de métal qui compose la couche intermédiaire en céramique contient un élément métallique en commun avec une couche qui est en contact avec celle-ci.

6. Pile à combustible selon l'une quelconque des revendications 2 à 5 comprenant en plus:
une couche composite qui est disposée entre la couche d'oxyde de métal compose la couche intermédiaire en céramique et une couche qui est en contact avec cette couche d'oxyde de métal, et est formée d'un mélange des composants constitutifs des deux couches adjacentes.

7. Pile à combustible selon l'une quelconque des revendications 1 à 5 comprenant en plus:
une couche catalytique qui est disposée, parmi les interfaces des diverses couches stratifiées entre la couche en métal perméable à l'hydrogène et la couche électrolyte, au niveau de l'interface d'une couche ayant une conductivité protonique, présente une activité qui génère des protons à partir d'atomes d'hydrogène et comprend en plus plusieurs trous d'épingle qui permettent aux couches qui se trouvent au-dessus et au-dessous de la couche catalytique d'enter en contact les unes avec les autres.
